(19) Europäisches Patentamt / European Patent Office / Office européen des brevets

(11) **EP 3 633 314 A1**

(12) **EUROPEAN PATENT APPLICATION**
published in accordance with Art. 153(4) EPC

(43) Date of publication:
**08.04.2020 Bulletin 2020/15**

(51) Int Cl.:
*G01B 7/14* (2006.01)   *B23K 26/00* (2014.01)

(21) Application number: **18806260.8**

(22) Date of filing: **16.02.2018**

(86) International application number:
**PCT/JP2018/005430**

(87) International publication number:
**WO 2018/216275 (29.11.2018 Gazette 2018/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **24.05.2017 JP 2017102665**

(71) Applicant: **Panasonic Intellectual Property Management Co., Ltd.**
**Osaka-shi, Osaka 540-6207 (JP)**

(72) Inventors:
• **TANAKA, Yasuyuki**
  **Osaka-shi, Osaka 540-6207 (JP)**
• **YOSHIDA, Yuya**
  **Osaka-shi, Osaka 540-6207 (JP)**

(74) Representative: **Vigand, Philippe et al**
**Novagraaf International SA**
**Chemin de l'Echo 3**
**1213 Onex - Genève (CH)**

(54) **ELECTROSTATIC CAPACITANCE TYPE HEIGHT SENSOR, LASER MACHINING NOZZLE USING SAME, AND LASER MACHINING DEVICE**

(57)   Electrostatic capacitance type height sensor (10) includes sensor electrode (11) attached to a tip of laser machining nozzle (1), signal processor (13) that transmits a voltage signal to sensor electrode (11) and detects a signal from sensor electrode (11) to measure a distance between a tip of sensor electrode (11) and workpiece (5) electrically connected to a ground, and cable (12) electrically connecting sensor electrode (11) to signal processor (13). Signal processor (13) includes a disconnection determinator that determines that cable (12) is broken if the signal from sensor electrode (11) is higher or equal to a predetermined level.

FIG. 1

EP 3 633 314 A1

**Description**

TECHNICAL FIELD

The present disclosure relates to an electrostatic capacitance type height sensor used for laser machining devices, and to a laser machining nozzle and a laser machining device that each include the electrostatic capacitance type height sensor.

BACKGROUND ART

If a workpiece is cut or processed using a laser machining device, adjusting the focus of laser beams on or near a surface of the workpiece is important in maintaining processing quality. Thus, it is necessary to keep the distance between a tip of a laser machining nozzle disposed on a robot arm or a part of the laser machining device and the workpiece at a desired amount. In general, an electrostatic capacitance type height sensor is used to measure this distance.

PTL 1 discloses an electrostatic capacitance type height sensor that measures distance by applying alternating current voltage between a sensor electrode attached to a tip of a laser machining nozzle and a workpiece electrically connected to a ground, detecting a modulated voltage at a conversion circuit, and converting the voltage into a distance. The modulated voltage is a voltage modulated in amplitude based on capacitance between the sensor electrode and the workpiece. The electrostatic capacitance type height sensor is configured to measure distance without influence from stray capacitance of a cable connected to the sensor electrode.

Citation List

Patent Literature

PTL 1: Unexamined Japanese Patent Publication No. H09-331089

SUMMARY OF THE INVENTION

The conventional height sensor disclosed in PTL 1 measures distance without influence from the stray capacitance of the cable connected to the sensor electrode. This configuration eliminates the need for readjusting the height sensor when the cable is replaced with another one.

The laser machining nozzle moves together with the robot arm and other parts. As a result, tension is often applied to the cable connected to the sensor electrode. This can disconnect the cable from the sensor electrode or cause a break in the cable. A break in the cable prevents the measurement of distance between the tip of the laser machining nozzle and the workpiece and may result in a processing defect. Meanwhile, the conventional height sensor described above may fail to properly detect a break in the cable. This is because in the actual height sensor, capacitance components due to elements other than the cable are electrically coupled to the conversion circuit and such capacitance components cause detection of a constant voltage even in a case of the broken cable.

The technique of the present disclosure has been developed in view of the above problem. It is an object of the present disclosure to provide an electrostatic capacitance type height sensor that is able to readily and reliably detect a break in a cable.

According to the technique of the present disclosure, to achieve the above object, an electrostatic capacitance type height sensor is designed to determine that a cable is broken if a signal detected by the electrostatic capacitance type height sensor is higher or equal to a predetermined level.

Specifically, an electrostatic capacitance type height sensor according to the present disclosure includes a sensor electrode attached to a tip of a laser machining nozzle, a signal processor transmitting a voltage signal to the sensor electrode and detecting a signal from the sensor electrode to measure a distance between a tip of the sensor electrode and a workpiece electrically connected to a ground, and a cable electrically connecting the sensor electrode to the signal processor. The signal processor includes a disconnection determinator that determines that the cable is broken if the signal from the sensor electrode is higher or equal to a predetermined level.

This configuration allows the disconnection determinator to readily determine presence or absence of a break in the cable from a value of the signal sent from the sensor electrode.

Preferably, the predetermined level is within a range from a value of the signal sent from the sensor electrode when the distance between the tip of the sensor electrode and the workpiece is a predetermined distance that is longer than a maximum distance set for laser processing to a value of the signal sent from the sensor electrode when the cable is not connected to the signal processor, inclusive.

This configuration prevents erroneous determination of a break in the cable and enables reliable detection of the presence or absence of a break in the cable.

A laser machining nozzle according to the present disclosure includes a first nozzle electrically connected to the sensor electrode of the electrostatic capacitance type height sensor described above and a second nozzle disposed so as to surround an outer periphery of the first nozzle with a space provided between the first and the second nozzles. The first nozzle defines a path for laser beam emission and a flow channel for assist gas fed during laser processing. The second nozzle is electrically insulated from the first nozzle and the sensor electrode with an insulator.

This configuration enables the electrostatic capacitance type height sensor to readily determine a break in the cable and enables the second nozzle to shield the sensor electrode from external electromagnetic noise.

Preferably, the first nozzle and the second nozzle are at an identical electric potential.

This configuration enables the second nozzle to reliably shield the sensor electrode from external electromagnetic noise.

Preferably, the laser machining nozzle further includes a structure that adds certain capacitance to the sensor electrode.

This configuration provides improved accuracy with which a break in cable is detected.

A laser machining device according to the present disclosure includes a laser light source that emits laser beams, an optical fiber that guides the laser beams, the laser machining nozzle described above to project the laser beams guided through the optical fiber onto a workpiece, a robot arm that moves the laser machining nozzle attached to an end of the robot arm, and a controller that controls the laser light source and an operation of the robot arm. The controller includes at least a robot controller that transmits signals to drive or stop an articular axis of the robot arm such that the tip of the laser machining nozzle draws a predetermined locus and a laser controller that controls the laser light source and stops laser oscillation at the laser light source when the disconnection determinator determines that the cable is broken. The robot controller includes at least a position controller that responds to a distance between the tip of the sensor electrode and the workpiece measured by the electrostatic capacitance type height sensor to control a position of the laser machining nozzle so as to ensure that the measured distance is a target value.

According to this configuration, the laser machining device stops laser oscillation upon detection of a break in the cable and thus prevents defective processing from extending over the workpiece.

As described above, an electrostatic capacitance type height sensor according to the present disclosure is able to readily and reliably determine a break in a cable connecting a sensor electrode to a signal processor of the electrostatic capacitance type height sensor.

BRIEF DESCRIPTION OF DRAWINGS

FIG. 1 is a drawing illustrating a configuration of a laser machining nozzle according to a first exemplary embodiment.
FIG. 2 is a block diagram illustrating a functional configuration of a signal processor of an electrostatic capacitance type height sensor.
FIG. 3 is a drawing illustrating an example of a circuit formed in the signal processor of the electrostatic capacitance type height sensor.
FIG. 4 is a drawing illustrating a configuration of a laser machining nozzle according to a second exemplary embodiment.
FIG. 5 is a drawing illustrating a configuration of a laser machining device according to a third exemplary embodiment.

DESCRIPTION OF EMBODIMENTS

Hereinafter, exemplary embodiments of the present disclosure will be described in detail with reference to the drawings. The following description of preferred exemplary embodiments is merely illustrative in nature and is in no way intended to limit the technique of the present disclosure, its application, or uses.

(First exemplary embodiment)

[Configuration of laser machining nozzle]

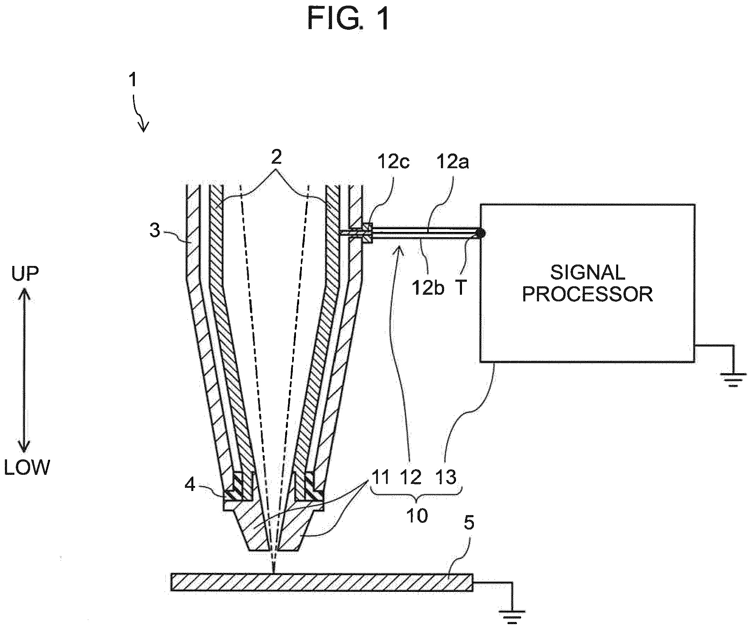

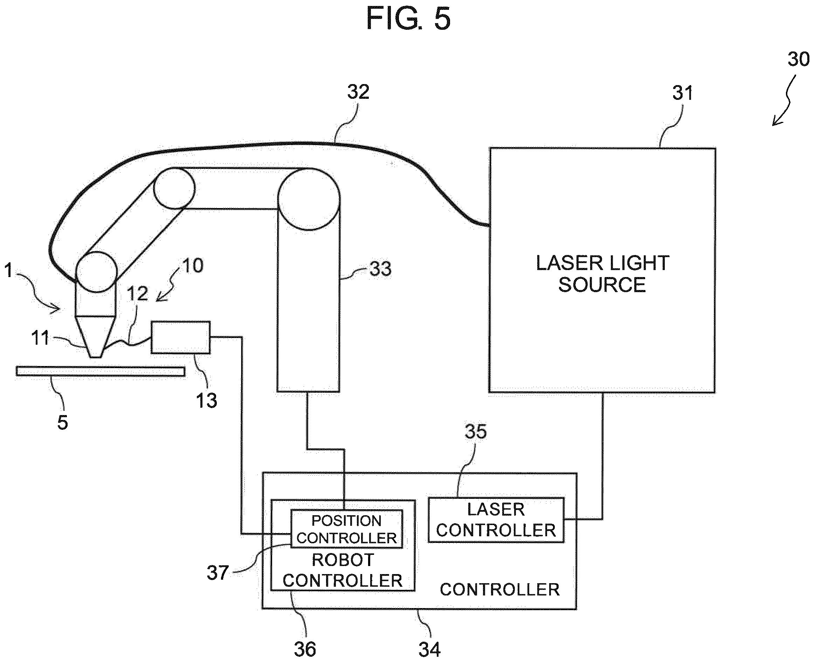

FIG. 1 illustrates a configuration of laser machining nozzle 1 according to the present exemplary embodiment. This laser machining nozzle 1 is attached to an end of robot arm 33 (not shown, see FIG. 5). Laser machining nozzle 1 includes sensor nozzle 2 (a first nozzle), shield nozzle 3 (a second nozzle), insulator 4 (a first insulator), and electrostatic capacitance type height sensor 10 (hereinafter, simply referred to as height sensor 10).

In the following description, a side of laser machining nozzle 1 from which laser beams enter may be referred to as "up" or "upper", whereas a side of laser machining nozzle 1 from which laser beams are emitted, i.e. a side on which workpiece 5 is disposed, may be referred to as "low" or "lower".

Sensor nozzle 2 is a metallic component including a conical part and cylindrical parts disposed respectively on upper and lower sides of the conical part. The conical part is formed so as to decrease in diameter along with a shift of the circular cross-section toward a lower side. The cylindrical part beneath the conical part is electrically connected to sensor electrode 11 of height sensor 10. A space inside sensor nozzle 2 is both a path for emission of laser beams indicated with a dash-dot-dot line in the figure and a flow channel for assist gas blown on workpiece 5 during laser processing. In other words, sensor nozzle 2 defines the path for laser beam emission and the flow channel for assist gas.

In a similar way to sensor nozzle 2, shield nozzle 3 is a metallic component including a conical part and cylindrical parts disposed respectively on upper and lower sides of the conical part. The conical part is formed so as to decrease in diameter along with a shift of the circular cross-section toward a lower side. Shield nozzle 3 is disposed so as to surround an outer periphery of sensor nozzle 2 with a space provided between the two nozzles. Shield nozzle 3 is configured so as to be at an electric potential identical to that of sensor nozzle 2 and sensor electrode 11. This configuration enables shield nozzle 3 to shield sensor nozzle 2 and sensor electrode 11 from external electromagnetic noise and protect sensor nozzle 2 from mechanical impact.

Insulator 4 (the first insulator) is an annular flanged component having a collar and being made of a heat-resistant resin or a similar material. An inner peripheral surface of insulator 4 is in contact with an outer peripheral surface of the lower cylindrical part of sensor nozzle 2. A lower surface of shield nozzle 3 is in contact with an upper surface of the collar. A lower surface of insulator 4 is in contact with sensor electrode 11. Insulator 4 electrically insulates sensor nozzle 2 and sensor electrode 11 from shield nozzle 3. Insulator 4 serves to seal a space between sensor nozzle 2 and shield nozzle 3.

Height sensor 10 includes sensor electrode 11, coaxial cable 12, and signal processor 13.

Sensor electrode 11 is a metallic component that is shaped into a substantially cone so as to decrease in both inside and outside diameters along with a shift of the circular cross-section toward a lower side. Sensor electrode 11 is attached to a tip of laser machining nozzle 1 so as to constitute a part of laser machining nozzle 1. An opening of a tip of sensor electrode 11 is equivalent to an outlet for emitting laser beams and an outlet for blowing assist gas. Disposition of workpiece 5 at a predetermined location causes a capacitance component to be electrically coupled to sensor electrode 11 in accordance with distance to workpiece 5.

Coaxial cable 12 is a cable of typical construction that includes inner wire 12a (an inner conductor), a dielectric substance covering inner wire 12a, shielding wire 12b (an outer conductor) covering the dielectric substance, and an insulating jacket covering shielding wire 12b. Coaxial cable 12 has coaxial connector 12c at an end. Inner wire 12a is electrically connected with sensor nozzle 2 through coaxial connector 12c. Shielding wire 12b is electrically connected with shield nozzle 3 through coaxial connector 12c. This configuration ensures that inner wire 12a and shielding wire 12b of coaxial cable 12 are at an identical electric potential. Shielding wire 12b acts as a shield against external electromagnetic noise.

Signal processor 13 has exterior terminal T that servers as both a signal transmission terminal to transmit voltage signals generated inside to sensor electrode 11 and a signal detection terminal to receive signals returned from sensor electrode 11. Exterior terminal T is connected to an end of coaxial cable 12. As described later, signal processor 13 has a function of measuring a distance between the tip of laser machining nozzle 1, i.e. the tip of sensor electrode 11, and workpiece 5 electrically connected to the ground based on a signal from sensor electrode 11. The signal transmission terminal and the signal detection terminal may be disposed separately from each other.

[Functional blocks of signal processor of height sensor]

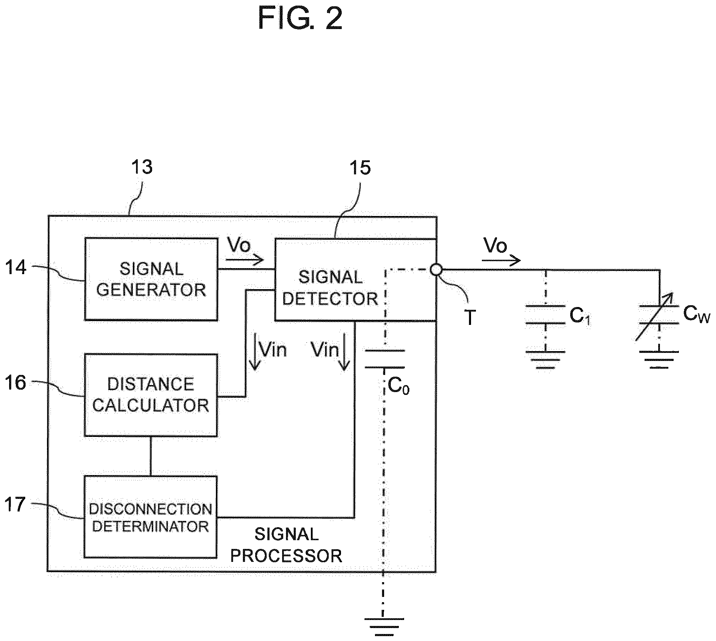

FIG. 2 is a block diagram illustrating a functional configuration of signal processor 13 of height sensor 10.

Signal processor 13 of height sensor 10 includes signal generator 14, signal detector 15, distance calculator 16, and disconnection determinator 17.

Signal generator 14 generates voltage signal Vo having predetermined frequency f and an amplitude and transmits voltage signal Vo to sensor electrode 11 through exterior terminal T and coaxial cable 12.

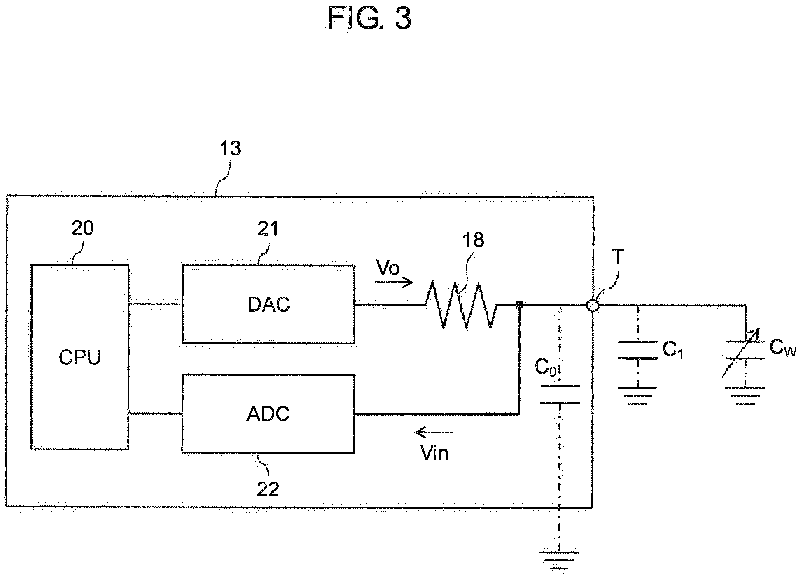

Signal detector 15 has exterior terminal T and detects voltage signal Vin returned from sensor electrode 11. Signal detector 15 has impedance adjustment resistor 18 (see FIG. 3) that is connected to exterior terminal T. Impedance adjustment resistor 18 is satisfactorily in direct connection with a path between signal generator 14 and exterior terminal T.

Distance calculator 16 calculates a distance between the tip of sensor electrode 11 and workpiece 5 based on voltage signal Vin detected by signal detector 15 and sends a value of the distance to an external controller or a storage unit (neither is shown). As described later, laser machining device 30 (see FIG. 5) controls a position of laser machining nozzle 1 in response to a difference between the distance calculated by distance calculator 16 and a target value.

Disconnection determinator 17 monitors voltage signal Vin detected by signal detector 15 and determines a break in coaxial cable 12 if signal Vin is higher than or equal to predetermined threshold level Vth. If a break in coaxial cable 12 is determined, disconnection determinator 17 sends a cable break detection signal directly to the external controller or the storage unit (neither is shown) or indirectly to the external controller or the storage unit via distance calculator 16.

Voltage signal Vin is a modulated signal modulated in amplitude from voltage signal Vo transmitted to sensor electrode 11 owing to factors such as capacitance components electrically coupled to exterior terminal T (the signal detection terminal). A relationship between an amplitude of the voltage signal |Vo| and an amplitude of the modulation signal |Vin| is represented by Equation (1):

[Mathematical Equation 1]

$$|Vin| = \frac{|Vo|}{\sqrt{1 + (\omega RC)^2}} \quad \cdots (1)$$

where

R is a resistance value of impedance adjustment resistor 18,
C is a sum total of values of capacitance components electrically coupled to exterior terminal T, and
$\omega$ is an angular frequency of voltage signal Vo and satisfies $\omega = 2\pi f$.

As is clear from Equation (1), voltage signal Vo sent from exterior terminal T (the signal detection terminal) is modulated in amplitude by a typical low-pass filter that depends on resistance value R, capacitance value C, and frequency f of voltage signal Vo. Voltage signal Vo modulated in amplitude is detected as modulation signal Vin at exterior terminal T.

Capacitance value C is represented by Equation (2) including $C_0$, $C_1$, and $C_W$ shown in FIG. 2:

$$C = C_0 + C_1 + C_W \cdots (2)$$

where

$C_0$ is a value of a capacitance component inside signal processor 13 electrically coupled to exterior terminal T,
$C_1$ is a value of stray capacitance of coaxial cable 12, and
$C_W$ is a value of capacitance between the tip of sensor electrode 11 and workpiece 5.

Capacitance value $C_0$ is a value that depends on factors such as a disposition of and a wiring layout of elements inside signal processor 13 and is substantially constant. Similarly, capacitance value $C_0$ is substantially constant if a disposition of laser machining nozzle 1 and coaxial cable 12 is fixed. Meanwhile, capacitance value Cw changes in accordance with the distance between the tip of sensor electrode 11 and workpiece 5. Hence, capacitance value $C_W$ can be calculated from a value of signal Vin and thus the distance between the tip of sensor electrode 11 and workpiece 5 can be calculated from the capacitance value.

In this exemplary embodiment, capacitance values $C_0$, $C_1$ are around 5 pF, and capacitance value $C_W$ ranges from 0 pF to several pF in accordance with the distance between the tip of sensor electrode 11 and workpiece 5. However, these values may be appropriately changed depending on factors such as a size and an interior layout of signal processor 13, a length of coaxial cable 12, or laser processing conditions.

Further, the signal processor is able to determine a break in coaxial cable 12 from a value of signal Vin. In this exemplary embodiment, a range of threshold level Vth that is specified to determine presence or absence of a break in coaxial cable 12 is represented by Inequality (3). If the value of signal Vin is higher or equal to threshold level Vth, the signal processor determines that coaxial cable 12 is broken:

[Mathematical Inequality 2]

$$\frac{|Vo|}{\sqrt{1+\left(\omega R\left(C_0+C_1+C_{W1}\right)\right)^2}} \le Vth \le \frac{|Vo|}{\sqrt{1+\left(\omega R C_0\right)^2}} \qquad \cdots(3)$$

where

$C_{W1}$ is a capacitance value calculated when the distance between the tip of sensor electrode 11 and workpiece 5 is longer by a predetermined length than the distance set for laser processing.

In this exemplary embodiment, the distance between the tip of sensor electrode 11 and workpiece 5 associated with $C_{W1}$ is set within an approximate range of several tens of cm to 1 m, whereas the distance set during laser processing is normally around several mm. In other words, in Inequality (3), Cwi is a value of a capacitance component electrically coupled to exterior terminal T when the distance between the tip of sensor electrode 11 and workpiece 5 is set to a predetermined distance that is longer than a maximum distance set for laser processing. Capacitance value $C_W$ gets smaller along with an increase in distance between the tip of sensor electrode 11 and workpiece 5, and hence the value of Vin associated with the capacitance value gets larger as is clear from Equations (1), (2).

The height sensor according to this exemplary embodiment is able to readily determine presence or absence of a break in coaxial cable 12 from the value of signal Vin that exterior terminal T acting as the signal detection terminal receives from sensor electrode 11. A lower limit of threshold level Vth is selected so as to include capacitance value $C_{W1}$ that is calculated when the distance between the tip of sensor electrode 11 and workpiece 5 is satisfactory longer than the distance for normal laser processing. Hence, the lower limit of Vth is satisfactory greater than the intensity of voltage signals detected at exterior terminal T (the signal detection terminal) during normal laser processing. This reliably prevents erroneous determination of a break in the cable.

As is clear from Equations (1), (2), an upper limit of Vth in Inequality (3) is a value of a voltage signal detected at exterior terminal T (the signal detection terminal) when coaxial cable 12 is not connected to exterior terminal T. If threshold level Vth is specified within the range shown by Inequality (3), the height sensor is able to reliably determine the presence or absence of a break in coaxial cable 12. Data can be acquired for the upper and lower limits of threshold level Vth beforehand and be used continuously. This allows the height sensor to readily determine a break in cable only from modulation signal values without addition of dedicated hardware or other devices.

Threshold level Vth may be changed freely within the range shown by Inequality (3) depending on laser processing conditions, especially the distance set between the tip of sensor electrode 11 and workpiece 5. As a matter of course, if the disposition, internal configuration or other factors of parts in laser machining nozzle 1 are changed, the specified range of threshold level Vth is changed in accordance with a change in conditions such as capacitance values of capacitance components electrically coupled to exterior terminal T (the signal detection terminal).

FIG. 3 illustrates a specific example of a circuit formed in signal processor 13 of height sensor 10. The circuit of signal processor 13 shown in FIG. 3 includes central processing unit (CPU) 20, digital-to-analog converter 21 (hereinafter referred to as DAC 21), analog-to-digital converter 22 (hereinafter referred to as ADC 22), impedance adjustment resistor 18, and exterior terminal T.

CPU 20 reads a control program or other instructions from the storage unit (not shown) and outputs a pulse train signal having a predetermined period. In response to a signal from ADC 22, CPU 20 calculates a distance between the tip of sensor electrode 11 and workpiece 5. If the number of waves included in a pulse train signal sent from ADC 22 per unit time is greater than or equal to a predetermined count, CPU 20 determines that coaxial cable 12 is broken and sends a cable break detection signal to the external controller or the storage unit (neither is shown). In other words, CPU 20 corresponds to distance calculator 16 and disconnection determinator 17 shown in FIG. 2.

DAC 21 converts a pulse train signal transmitted from CPU 20 into an analog voltage signal having a predetermined frequency and amplifies the analog voltage signal within a predetermined range to output the amplified signal as voltage signal Vo. In other words, DAC 21 corresponds to signal generator 14 shown in FIG. 2.

ADC 22 detects modulation signal Vin sent from sensor electrode 11 through coaxial cable 12. ADC 22 converts modulation signal Vin into a pulse train signal having a count of waves in accordance with the amplitude of signal Vin and transmits the pulse train signal to CPU 20. ADC 22 corresponds to a part of signal detector 15 shown in FIG. 2.

Signal processor 13 of height sensor 10 has the circuit shown in FIG. 3 and is hence allowed to diminish an effect of signal offset. The circuit also allows the signal processor to detect contact between sensor electrode 11 and workpiece 5.

The circuit of signal processor 13 shown in FIG. 3 is only an example and may have any other configuration. For instance, the circuit may include an alternating-current power source instead of DAC 21 or may include an analog filter instead of ADC 22.

(Second exemplary embodiment)

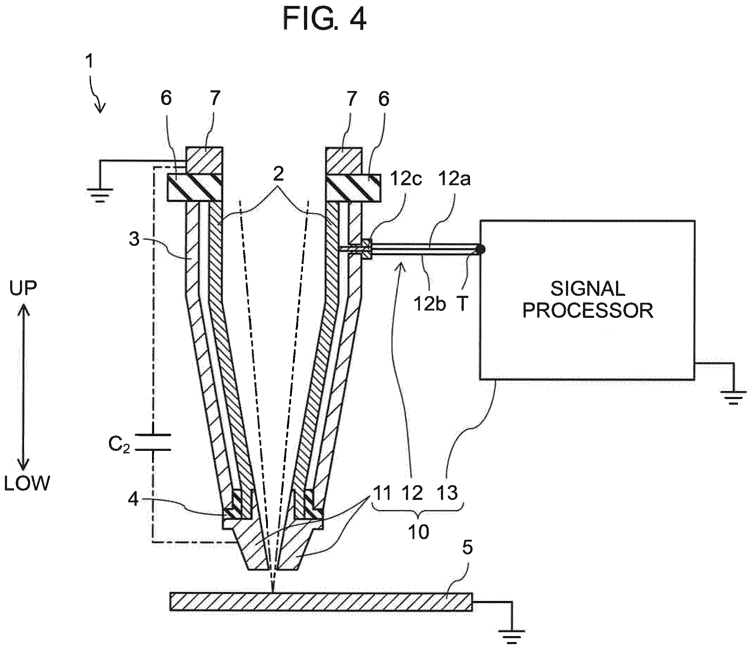

FIG. 4 illustrates a configuration of laser machining nozzle 1 according to the present exemplary embodiment. A configuration shown in this exemplary embodiment differs from the configuration shown in the first exemplary embodiment in that laser machining nozzle 1 further includes conductive part 7. Conductive part 7 is electrically insulated from sensor nozzle 2 and shield nozzle 3 by insulator 6 (a second insulator) having an annular shape and is electrically connected to a ground such that conductive part 7 is put at ground potential. Insulator 6 also acts as a gasket to prevent assist gas from leaking out from laser machining nozzle 1.

Since the laser machining nozzle includes insulator 6 and conductive part 7, sum total C of capacitance values of capacitance components electrically coupled to exterior terminal T (a signal detection terminal) is represented by Equation (4):

$$C = C_0 + C_1 + C_2 + C_W \cdots (4)$$

where
$C_2$ is a value of capacitance between conductive part 7 and sensor electrode 11.
A range specified for threshold level Vth is represented by Inequality (5):
[Mathematical Inequality 3]

$$\frac{|Vo|}{\sqrt{1 + \left(\omega R \left(C_0 + C_1 + C_2 + C_{W1}\right)\right)^2}} \leq Vth \leq \frac{|Vo|}{\sqrt{1 + \left(\omega R C_0\right)^2}} \qquad \cdots (5)$$

In this way, certain capacitance is added to sensor electrode 11 and sum total C of capacitance values in this exemplary embodiment is thereby greater than the sum total of capacitance values shown in the first exemplary embodiment. Thus, as is clear from Equations (1), (4), and Inequality (5), a rate of change in modulation signal Vin due to presence or absence of a break in coaxial cable 12 is higher in this exemplary embodiment than in the first exemplary embodiment. In other words, this exemplary embodiment makes it easier to determine the presence or absence of a break in cable and provides improved accuracy with which a break in cable is detected.

In this exemplary embodiment, the laser machining nozzle has insulator 6 (the second insulator) and conductive part 7 to add certain capacitance to sensor electrode 11. This configuration, however, should not be construed to limit a way of adding certain capacitance. The laser machining nozzle may have a separate structure that adds certain capacitance to sensor electrode 11 to increase sum total C of capacitance values. For instance, a separate capacitor may be connected between sensor electrode 11 and the ground. Preferably, capacitance value $C_2$ is lower than each capacitance value $C_0$, $C_1$, $C_W$ to maintain sensitivity with which distance between a tip of sensor electrode 11 and workpiece 5 is measured.

(Third exemplary embodiment)

FIG. 5 illustrates a configuration of a laser machining device according to the present exemplary embodiment. This laser machining device 30 includes laser light source 31, optical fiber 32, robot arm 33, laser machining nozzle 1, and controller 34. Illustration and description of various parts other than the component described above will be omitted for explanatory convenience. Laser machining device 30 also includes a feed line (not shown) to feed assist gas to laser machining nozzle 1.

Laser light source 31 includes a power source (not shown), a laser resonator (not shown) that generates laser beams in response to the supply of electricity from the power source, and an optical system (not shown) that concentrates and couples the laser beams into optical fiber 32.

Optical fiber 32 receives laser beams that have been generated by the laser resonator and concentrated by the optical system and guides the laser beams into laser machining nozzle 1. Optical fiber 32 may be an optical fiber of a single-clad, a double-clad or other type that is appropriately selected depending on the type of laser machining, laser beam intensity, and other conditions. Similarly, a core diameter or a cladding diameter of optical fiber 32 may be changed as appropriate.

Laser machining nozzle 1 is attached to an end of robot arm 33. Robot arm 33 receives signals based on a processing program or other instructions from controller 34 and moves laser machining nozzle 1 so as to draw a predetermined locus. During laser processing, robot arm 33 is used to control a position of laser machining nozzle 1 so as to ensure that the distance between a tip of sensor electrode 11, i.e. a tip of laser machining nozzle 1, and workpiece 5 is a predetermined distance.

Controller 34 includes laser controller 35 that controls quantity and others of light emitted from laser light source 31 and robot controller 36 that controls an operation of robot arm 33.

Laser controller 35 controls electric power supplied from the power source and temperature and other properties of the laser resonator to ensure emission of laser beams with desired intensity.

Robot controller 36 transmits signals based on the processing program or other instructions to drive or stop an articular axis of robot arm 33 such that the end of robot arm 33, i.e. the tip of laser machining nozzle 1, draws a predetermined locus. Robot controller 36 includes position controller 37. In response to the distance between the tip of sensor electrode 11 and workpiece 5 measured by height sensor 10, position controller 37 transmits a signal to robot arm 33 to control the position of laser machining nozzle 1, specifically a position of robot arm 33, so as to ensure that the measured distance is a target value.

Next, an operation of laser machining device 30 will be described.

First, a power source for overall laser machining device 30 is turned on to supply electric power to laser machining device 30. A predetermined laser processing program starts automatically or by an operator's control. Robot arm 33 moves to a predetermined initial position, and height sensor 10 is supplied with electric power to be ready for measurement. The power source of laser light source 31 is turned on.

Next, workpiece 5 is put into position. Laser machining device 30 moves robot arm 33 to shift laser machining nozzle 1 to near workpiece 5. Height sensor 10 measures an actual distance between laser machining nozzle 1 and workpiece 5. Position controller 37 compares the actual distance with a target value that is specified in the program for a target distance between the tip of sensor electrode 11 and workpiece 5. Determining a target position associated with a difference between these distances, position controller 37 drives robot arm 33 to shift laser machining nozzle 1 to the target position.

Laser machining device 30 feeds assist gas into laser machining nozzle 1 and lets laser light source 31 generate laser beams. The laser beams are guided into laser machining nozzle 1 by optical fiber 32 and are projected onto workpiece 5. This starts laser processing. During laser processing, height sensor 10 always measures distance between the tip of sensor electrode 11 and workpiece 5. Position controller 37 controls the position of laser machining nozzle 1, i.e. the position of robot arm 33, in response to an actual measured distance.

When needed processing is completed, laser oscillation stops in laser light source 31 and then the feeding of assist gas stops. Robot arm 33 moves to the predetermined initial position and is put on standby at the position until next processing starts.

If a break occurs in coaxial cable 12 connected to height sensor 10 during the laser processing described above, disconnection determinator 17 of signal processor 13 immediately detects the break in the cable and sends a cable break detection signal to controller 34.

In response to the signal, laser controller 35 of controller 34 immediately stops laser oscillation at laser light source 31. At the same time, robot controller 36 of controller 34 moves robot arm 33 to the predetermined initial position.

In this exemplary embodiment, height sensor 10 always measures distance between the tip of sensor electrode 11 and workpiece 5 and concurrently determines the presence or absence of a break in coaxial cable 12 during laser processing. As for conventional laser machining devices, coaxial cable 12 has been inspected for the presence or absence of a break in the cable at opportunities such as periodic checks on the laser machining device. The conventional laser machining device has never allowed real-time detection of a break in coaxial cable 12.

Laser machining device 30 according to this exemplary embodiment determines the presence or absence of a break in coaxial cable 12 in real time. Upon the detection of a break in the cable, laser machining device 30 immediately stops an operation. This prevents defective processing from extending over workpiece 5. A break in the cable disables height sensor 10 from measuring distance. Accordingly, this laser machining device prevents laser machining nozzle 1 from colliding with workpiece 5. This protects laser machining nozzle 1 from breakage or damage.

If laser controller 35 immediately stops laser oscillation upon receiving a cable break detection signal, laser light source 31 may break down. In such a case, laser controller 35 can be configured to control laser light source 31 to gradually stop laser oscillation. Similarly, if immediate movement of robot arm 33 to the initial position may cause robot arm 33 to go out of order, the speed of movement of robot arm 33 can be controlled to avoid such failure.

If movement of robot arm 33 to the initial position may cause robot arm 33 only to go out of order, the robot controller can be configured to control robot arm 33 to stay at a position where the robot arm is situated when the controller has received a cable break detection signal.

In the first to the third exemplary embodiments, sensor electrode 11 and signal processor 13 of height sensor 10 are connected through coaxial cable 12. However, the cable is not particularly limited to this example and may be a cable of any other type.

In the third exemplary embodiment, signal processor 13 of height sensor 10 may be built into controller 34 in laser machining device 30. However, heed needs to be taken to ensure that the length of coaxial cable 12 is not longer than necessary.

Preferably, sensor nozzle 2, shield nozzle 3, and conductive part 7 are made of copper or a copper-based material in terms of lower electrical resistance and higher thermal conductivity. However, these components may be made of other material such as an aluminum-based material.

INDUSTRIAL APPLICABILITY

An electrostatic capacitance type height sensor according to the present disclosure is able to readily and reliably determine presence or absence of a break in a cable connected to a sensor electrode. This technique can be usefully applied to devices such as laser machining devices.

REFERENCE MARKS IN THE DRAWINGS

    1: laser machining nozzle
    2: sensor nozzle (first nozzle)
    3: shield nozzle (second nozzle)
    4: insulator (first insulator)
    5: workpiece
    6: insulator (second insulator)
    7: conductive part
    10: electrostatic capacitance type height sensor
    11: sensor electrode
    12: coaxial cable (cable)
    13: signal processor
    14: signal generator
    15: signal detector
    16: distance calculator
    17: disconnection determinator
    30: laser machining device
    31: laser light source
    32: optical fiber
    33: robot arm
    34: controller
    35: laser controller
    36: robot controller
    37: position controller
    T: exterior terminal (signal detection terminal)

**Claims**

1. An electrostatic capacitance type height sensor comprising:

    a sensor electrode attached to a tip of a laser machining nozzle;
    a signal processor that transmits a voltage signal to the sensor electrode and detects a signal from the sensor electrode to measure a distance between a tip of the sensor electrode and a workpiece electrically connected to a ground; and
    a cable electrically connecting the sensor electrode to the signal processor,
    wherein the signal processor includes a disconnection determinator that determines that the cable is broken on condition that the signal from the sensor electrode is higher or equal to a predetermined level.

2. The electrostatic capacitance type height sensor according to claim 1, wherein the predetermined level is within a range from a value of the signal sent from the sensor electrode when the distance between the tip of the sensor electrode and the workpiece is a predetermined distance that is longer than a maximum distance set for laser processing to a value of the signal sent from the sensor electrode when the cable is not connected to the signal processor, inclusive.

3.  A laser machining nozzle comprising:

 a first nozzle electrically connected to the sensor electrode of the electrostatic capacitance type height sensor according to claim 1 or 2, the first nozzle defining a path for laser beam emission and a flow channel for assist gas fed during laser processing; and
 a second nozzle disposed so as to surround an outer periphery of the first nozzle with a space provided between the first and the second nozzles, the second nozzle being electrically insulated from the first nozzle and the sensor electrode with an insulator.

4.  The laser machining nozzle according to claim 3, wherein the first nozzle and the second nozzle are at an identical electric potential.

5.  The laser machining nozzle according to claim 3 or 4, further comprising a structure that adds certain capacitance to the sensor electrode.

6.  A laser machining device comprising:

 a laser light source that emits laser beams;
 an optical fiber that guides the laser beams;
 the laser machining nozzle according to any one of claims 3 to 5 that projects the laser beams guided through the optical fiber onto the workpiece;
 a robot arm that moves the laser machining nozzle attached to an end of the robot arm; and
 a controller that controls the laser light source and an operation of the robot arm,
 wherein the controller includes:

  a robot controller that transmits signals to drive or stop an articular axis of the robot arm in such a way that the tip of the laser machining nozzle draws a predetermined locus; and
  a laser controller that stops laser oscillation at the laser light source when the disconnection determinator determines that the cable is broken, and

 wherein the robot controller includes
 a position controller that responds to a distance between the tip of the sensor electrode and the workpiece measured by the electrostatic capacitance type height sensor to control a position of the laser machining nozzle so as to ensure that the measured distance is a target value.

## FIG. 1

EP 3 633 314 A1

# FIG. 2

EP 3 633 314 A1

# FIG. 3

# FIG. 4

EP 3 633 314 A1

# FIG. 5

EP 3 633 314 A1

# EP 3 633 314 A1

## INTERNATIONAL SEARCH REPORT

International application No.

PCT/JP2018/005430

A. CLASSIFICATION OF SUBJECT MATTER
Int.Cl. G01B7/14(2006.01)i, B23K26/00(2014.01)i

According to International Patent Classification (IPC) or to both national classification and IPC

B. FIELDS SEARCHED

Minimum documentation searched (classification system followed by classification symbols)
Int.Cl. G01B7/14, B23K26/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 5-18791 A (C A WEIDMUELLER GMBH & CO.) 26 January 1993, abstract, paragraphs [0001]-[0049], fig. 1-3 & US 5489888 A, abstract, column 1, line 17 to column 8, line 61, fig. 1-3 | 1-6 |
| Y | JP 2009-300160 A (IHI CORPORATION) 24 December 2009, paragraph [0023], fig. 3 (Family: none) | 1-6 |
| Y | JP 2008-43989 A (OMRON LASERFRONT INC.) 28 February 2008, paragraph [0031], fig. 2 & KR 10-2008-0017281 A | 5-6 |
| Y | JP 11-197866 A (FUJI ELECTRIC CO., LTD.) 27 July 1999, paragraphs [0002]-[0003], fig. 1 (Family: none) | 6 |
| A | US 5293023 A (MITSUI PETROCHEMICAL INDUSTRIES, LTD.) 08 March 1994, entire text, all drawings & EP 560637 A1 | 1-6 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 April 2018 (23.04.2018) | 01 May 2018 (01.05.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09331089 B